# EUROPÄISCHE PATENTANMELDUNG

(11) **EP 0 745 882 A1**
(43) Veröffentlichungstag der Anmeldung: **04.12.1996**
(21) Anmeldenummer: 96108150.2
(22) Anmeldetag: 22.05.1996
(51) Int. Cl.: G02F 1/015

(54) **Elektrooptischer Modulator**

(30) Priorität: 03.06.1995 DE 19520473
(71) Anmelder: ROBERT BOSCH GMBH, 70442 Stuttgart (DE)
(72) Erfinder: Schwander, Thomas, 71522 Backnang (DE)

(57) **Zusammenfassung**

Es sind elektrooptische Modulatoren mit Pin-Struktur bekannt, wobei über eine p- und eine n-dotierte Schicht eine Steuerspannung zur Erzeugung eines elektrischen Modulationsfeldes anlegbar ist und wobei die intrinsische Schicht wie folgt aufgebaut ist: es sind aktive Zonen in Form von Quantenfilmen vorgesehen, die Quantenfilme sind in Gruppen angeordnet, die Quantenfilme einer Gruppen sind durch Barrieren getrennt, die Stark-Übergänge erlauben und die Quantenfilme verschiedener Gruppen sind durch Barrieren getrennt, die Stark-Übergänge verhindern. Um einen besonders effektiven Effekt auszunutzen, der zu einer wirkungsvollen Absoptionsmodulation führt, weisen die Quantenfilme einer Gruppe unterschiedliche Dimensionierungen auf, wobei die Gruppe symmetrisch aufgebaut ist.

## Beschreibung

### Stand der Technik

Die Erfindung betrifft einen elektrooptischen Modulator mit pin-Struktur, wobei über eine p- und eine n-dotierte Schicht eine Steuerspannung zur Erzeugung eines elektrischen Modulationsfeldes anlegbar ist und wobei die intrinsische Schicht wie folgt aufgebaut ist:
es sind aktive Zonen in Form von Quantenfilmen vorgesehen,
die Quantenfilme sind in Gruppen angeordnet,
die Quantenfilme einer Gruppe sind durch Barrieren getrennt,
die Stark-Übergänge erlauben, und
die Quantenfilme verschiedener Gruppen sind durch Barrieren getrennt, die Stark-Übergänge verhindern.

Strahlung aus optisch gepumpten Festkörperlasern wird im allgemeinen extern moduliert, mit sogenannten externen Modulatoren. Solche Modulatoren arbeiten mit Stoffen, in denen entweder die Brechzahl oder die Absorption für die optische Welle durch das Modulationssignal geändert wird. Die Absorption eines Stoffes für optische Wellen läßt sich aufgrund des Franz-Keldysh-Effekts steuern. Es handelt sich bei diesem Effekt um die Verschiebung der Absorptionskante eines Halbleiters im elektrischen Feld, durch die sich für Wellenlängen dicht an der Absorptionskante die Absorption sehr stark ändert. Um Wellenleitermodulatoren zur Integration möglichst kurz zu halten und auch die Steuerleistung zu begrenzen, muß mit möglichst starken elektrooptischen Effekten gearbeitet werden. Eine wirksame Absorptionsmodulation wird durch den Quantum-Confined Stark-Effekt in "Multiple Quantum Well" -Strukturen erreicht. Dies sind Halbleiterstrukturen, die aus mehreren, nur 5 bis 10 nm dicken Epitaxieschichten kleinen Bandabstands bestehen, mit Zonen großen Bandabstands dazwischen.

Aus der gattungsbildenden EP 622 654 A2 ist ein optoelektronisches Halbleiterbauelement zur Modulation eines zugeführten Lichtstrahls bekannt, wobei das optoelektronische Halbleiterbauelement eine pin-Struktur aufweist. Es ist vorgesehen, daß m Quantenfilme in mindestens zwei Gruppen angeordnet sind, wobei die einer Gruppe zugehörigen Quantenfilme durch Barrieren getrennt sind, die im wesentlichen Stark-Übergänge zwischen den einzelnen Quantenfilmen der jeweiligen Gruppe erlauben, und daß die einzelnen Gruppen derart gekoppelter Quantenfilme jeweils durch eine weitere Barriere getrennt sind, die im wesentlichen Stark-Leiterübergänge zwischen den aktiven Schichten der Halbleiterstrukturen einer Gruppe zu einer aktiven Schicht einer anderen Gruppe verhindern.

Es ist Aufgabe der Erfindung, ausgehend von diesem Stand der Technik, einen elektrooptischen Modulator anzugeben, mit dem mit einer geringen Steuerspannung eine wirkungsvolle Absorptionsmodulation erzielt werden kann.

Die Aufgabe wird durch einen Modulator mit den Merkmalen des Patentanspruches 1 gelöst. Vorteilhafte Weiterbildungen sind in den Unteransprüchen angegeben.

Ein sehr effizienter Effekt zum Erzielen einer wirkungsvollen Absorptionsmodulation wird durch die inhomogene Anordnung von Short-Period Super-Lattice-Strukturen (SPSL-Strukturen) in einer Gruppe erreicht. Durch eine Abfolge extrem dünner (minimal bis zu monoatomaren Lagen) Quantenfilm-Barriere-Schichten, sogenannte SPSL-Strukturen, werden quaternäre Quantenfilme nachgebildet. Berechnungen zeigen für die nachgebildeten quaternären Quantenfilme eine effizientere Stark-Verschiebung als für äquivalente quaternäre Quantenfilme. Die Stark-Verschiebung ist umso effizienter, je grober die SPSL-Struktur den ursprünglichen quaternären Quantenfilm annähert. Eine inhomogene SPSL-Struktur wird erreicht, indem die Quantenfilme einer Gruppe unterschiedliche Dimensionierungen aufweisen. Vorteilhaft ist es, die Struktur einer Gruppe weiterhin symmetrisch zu einer mittleren Schicht aufzubauen, da in diesem Fall auch der elektrooptische Effekt symmetrisch auftritt (bezüglich der Feldstärke). Bildet man beispielsweise die äußeren Quantenfilme einer Gruppe breiter oder tiefer bzw. breiter und tiefer aus als die inneren Quantenfilme, so ist die Verschiebung der Elektronenwellenfunktion im elektrischen Feld besonders ausgeprägt. Mit einer solchen Struktur ist es möglich, bereits mit einer Steuerspannung von 2V eine wirkungsvolle Absorptionsmodulation zu erzielen.

Der Abstand der Betriebswellenlänge zur Absorptionskante des Materials definiert die parasitäre Phasenmodulation des Modulators, den Chirp. Dieser wird charaktersisiert durch den Alphafaktor. Aus übertragungstechischen Gründen sollte der Alphafaktor ohne Verwendung einer Vorspannung auf Werte zwischen -1 und 0 eingestellt werden. Die Herstellung einer quaternären Quantenfilmstruktur mit den dafür erforderlichen Toleranzen ist sehr schwierig. Auch der Einsatz einer SPSL-Struktur bei der erforderlichen Bandkantenwellenlänge mit den gitterangepaßten ternären Komponenten InGaAs und InAlAs bietet keine generelle Lösung. Das Schichtdickenverhältnis von InGaAs zur InAlAs müßte ungefähr 10:1 betragen, was bei einer Gesamtdicke von 15 nm bedeutet, daß Schichtdicken von einer Atomlage hergestellt werden müßten. Daher sollten vorzugsweise gitterverspannte Schichten verwendet werden, die eine Einstellung des Bandabstandes über die Verspannung erlauben. Dies entschärft das Schichtdickenverhältnis.

Eine Ausführungsbeispiel der Erfindung wird anhand der Zeichnungen erläutert. Es zeigen:
Figur 1 den Potentialverlauf im Leitungsband einer SPSL "Multiple Quantum Well" -Struktur,
Figur 2 einen Vergleich von Potential und Elektronenwellenfunktion eines quaternären Quantenfilms, einer Nachbildung eines quaternären Quantenfilms durch eine SPSL-Struktur und einer Nachbildung eines quaternären Quantenfilms durch eine geringe Anzahl von Schichten,
Figur 3 Potential und Elektronenwellenfunktion einer erfindungsgemäßen Anordnung im feldfreien Fall und
Figur 4 Potential und Elektronenwellenfunktion einer erfindungsgemäßen Anordnung mit angelegtem Modulationsfeld,
Figur 5 die Stark-Verschiebung im Leitungsband von quaternären und SPSL-Quantenfilmen und
Figur 6 die Stark-Verschiebung in homogenen und inhomogenen SPSL-Strukturen.

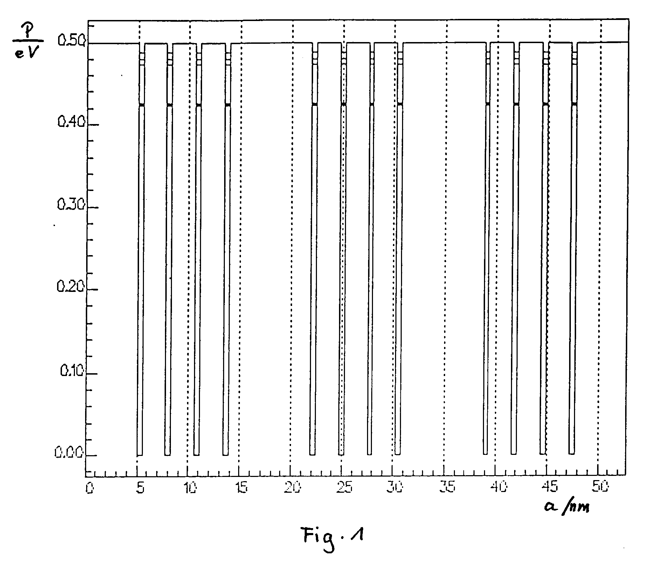

In Figur 1 ist der Leitungsband-Potentialverlauf P in eV gegen die geometrischen Abmessungen a in nm einer SPSL-"Multiple Quantum Well" -Struktur aufgetragen. Die "'Multiple Quantum Well" -Struktur besteht aus drei Gruppen mit jeweils vier Quantenfilmen, die durch drei Barrieren getrennt sind. Auch die drei Gruppen sind durch Barrieren getrennt. Während die SPSL-Quantenfilme aus GaInAs bestehen, sind die Barrieren, sowohl zwischen den SPSL-Quantenfilmen als auch zwischen den Gruppen aus AlInAs hergestellt. Durch die Quantenschichten entstehen sehr schmale und tiefe Potentialtröge.

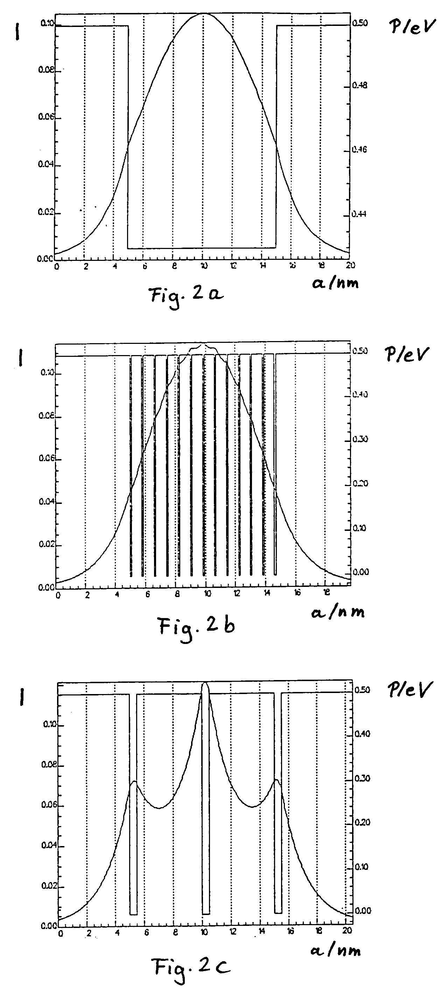

Figur 2a zeigt den Potentialverlauf und die Elektronenwellenfunktion eines 10 nm breiten quaternären Quantenfilms über den geometrischen Abmessungen des Films. In Figur 2b ist der quaternäre Quantenfilm durch SPSL-Strukturen mit 13 SPSL-Quantenfilmen angenähert. Die 13 Quantenfilme bestehen aus GaInAs und sind jeweils 0,1 nm breit. Die 12 dazwischen liegenden Barriereschichten bestehen aus AlInAs und sind jeweils 0,7 nm breit. Die Elektronenwellenfunktion der Nachbildung des quaternären Quantenfilms unterscheidet sich kaum von der des äquivalenten quaternären Quantenfilms. Eine solche Anordnung ist jedoch nicht herstellbar. In Figur 2c ist die Elektronenwellenfunktion und das Potential einer realisierbaren Anordnung aus drei Quantenfilmen dargestellt. Die drei Quantenfilme bestehen wiederum aus GaInAs sind aber 0,5 nm breit, die dazwischen liegenden Barrieren bestehen aus AlInAs und sind 4,5 nm breit. Die Elektronenwellenfunktion zeigt ein ausgeprägtes Maximum an der Stelle des mittleren Quantenfilms und zwei Nebenmaxima an den Orten der äußeren Quantenfilme. Trotz der Unterschiede bei den Elektronenwellenverteilungen weisen alle drei Anordnungen ungefähr gleiche Quantisierungsenergien auf.

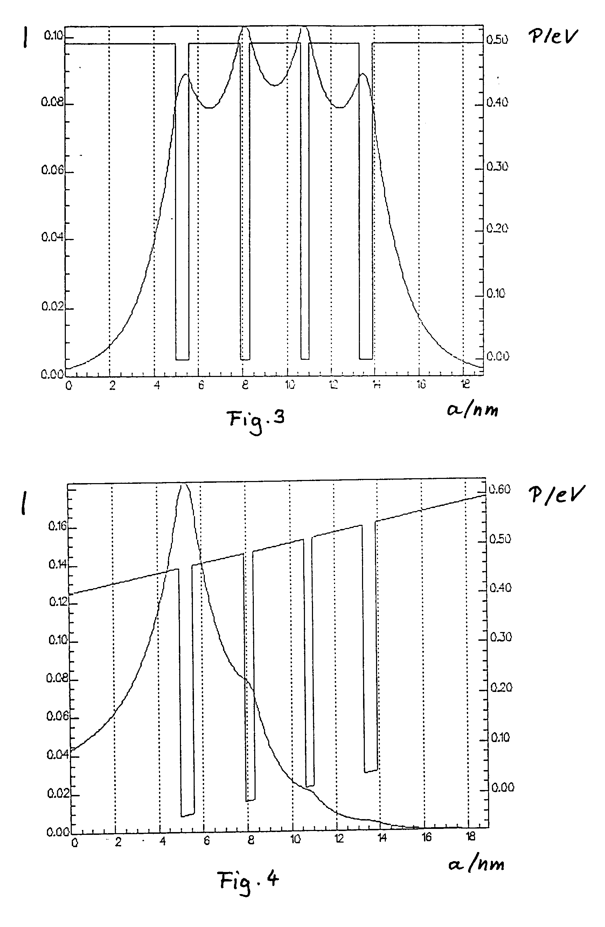

In Figur 3 ist die Elektronenwellenfunktion und die Potentialverteilung einer erfindungsgemäßen Quantenfilmstruktur dargestellt. Eine Gruppe der erfindungsgemäßen Struktur besteht aus vier Quantenfilmen. Die beiden mittleren Quantenfilme sind dabei schmäler als die äußeren Quantenfilme. In der Elektronenwellenfunktion zeigt sich, daß die Nebenmaxima sich in ihrer absoluten Höhe weniger von den Hauptmaxima unterscheiden.

In Figur 4 ist dieselbe Anordnung nochmals dargestellt, wobei jedoch ein äußeres Modulationsfeld von 100 kV pro cm angelegt ist. Im Vergleich beträgt die Stark-Verschiebung bei 100 kV pro cm und vergleichbaren Quantenfilmen bei einem einfachen quaternären Quantenfilm 14,7 meV, bei einer homogenen SPSL-Struktur 20,6 meV und bei der erfindungsgemäßen Struktur 25,5 meV.

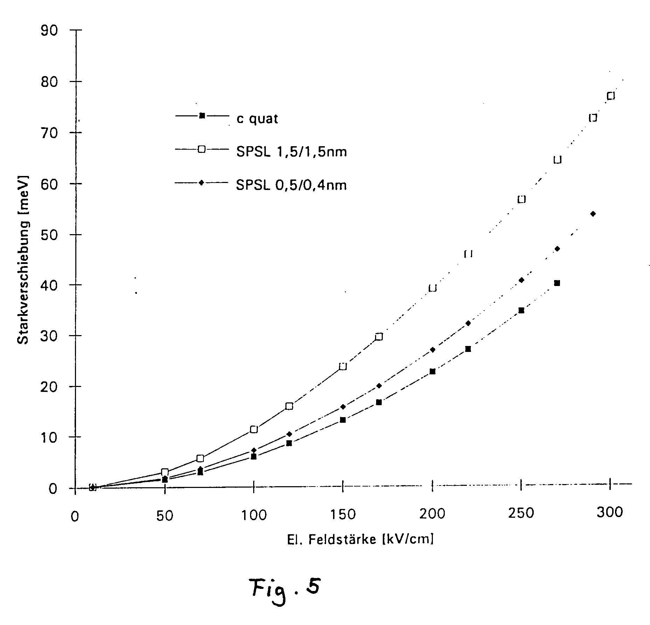

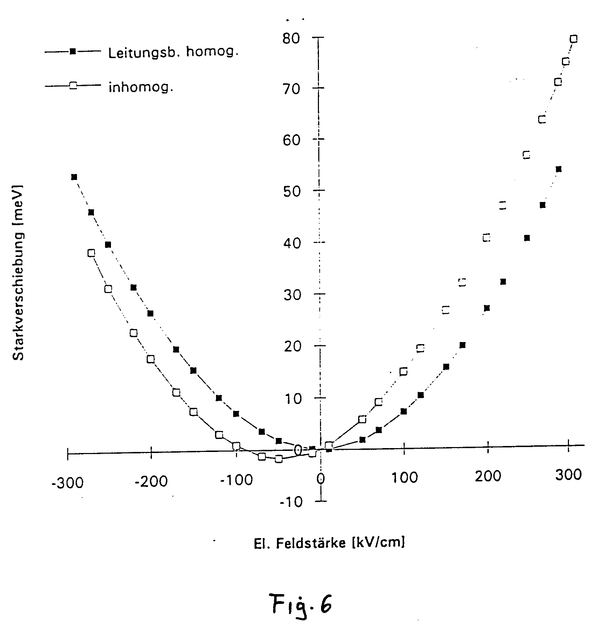

Die Auswirkung der Struktur auf die Stark-Verschiebung ist auch in den Figuren 5 und 6 dargestellt. Die Figuren zeigen jeweils die Stark-Verschiebung im Leitungsband in meV aufgetragen gegen die elektrische Feldstärke in kV/cm. In Figur 5 sind drei verschiedene Kurven dargestellt, wobei die Kurven jeweils für folgende Anordnungen stehen. Dabei entspricht die mit c quat bezeichnete Kurve einer Anordnung mit quaternären AlₓGa_{y}In_{1-x-y}As-Quantenfilmen (x = 0,24, y = 0,234) in AlₓIn₁₋ₓAs-Barrieren (x = 0,48), wohingegen die mit SPSL bezeichneten Kurven äquivalente Nachbildungen dieser Quantenfilme mit dünnen Al_{0,48}In_{0,52}As (1,5 nm bzw. 0,5 nm) und Ga_{0,47}In_{0,53}As-Schichten (1,5 nm bzw. 0,4 nm) in AlInAs-Barrieren sind. Die effizienteste Stark-Verschiebung weist die relativ große Nachbildung mit 1,5 nm/1,5 nm-SPSLs auf mit einer Verbesserung von ca. 70% gegenüber dem quaternären Quantenfilm.

In Figur 6 sind zwei verschiedene Kurven dargestellt, wobei die Kurve mit den ausgefüllten Quadraten sich auf eine homogene Anordnung von 0,5 nm/0,4 nm-SPSLs bezieht, also auf Quantenfilme, die die gleichen Dimensionen aufweisen, während die Kurve mit den nicht ausgefüllten Quadraten für eine inhomogene SPSL-Struktur steht, bei der die Quantenfilme der SPSL-Struktur statt konstant 0,5 nm Dicke aufzuweisen von 0,4 nm bis 0,6 nm variiert werden. Da die Anordnung der Quantenfilme in der Gruppe dadurch unsymmetrisch wird, zeigt auch die Stark-Verschiebung eine Asymmetrie. Für positive Feldstärken von 100 kV/cm wird die Effizienz der Stark-Verschiebung im Leitungsband nahezu verdoppelt. Dies geschieht allerdings auf Kosten der Stark-Effizienz bei negativen Feldstärken, die in der gleichen Struktur im Valenzband wirksam werden. Der Gewinn an Stark-Effizienz im Leitungsband wird daher zumindest teilweise durch einen Verlust im Valenzband kompensiert. Dieser Nachteil wird in der erfindungsgemäßen Anordnung nach Figur 3 vermieden, die eine inhomogene, aber symmetrische Quantenfilmverteilung anstrebt, die für positive wie negative Feldstärke eine Verbesserung der Stark-Verschiebung bewirkt.

## Patentansprüche

1. Elektrooptischer Modulator mit pin-Struktur, wobei über eine p- und eine n-dotierte Schicht eine Steuerspannung zur Erzeugung eines elektrischen Modulationsfeldes anlegbar ist und wobei die intrinsische Schicht wie folgt aufgebaut ist:
a) es sind aktive Zonen in Form von Quantenfilmen vorgesehen,
b) die Quantenfilme sind in Gruppen angeordnet,
c) die Quantenfilme einer Gruppe sind durch Barrieren getrennt, die Stark-Übergänge erlauben,
d) die Quantenfilme verschiedener Gruppen sind durch Barrieren getrennt, die Stark-Übergänge verhindern,
dadurch gekennzeichnet, daß die Quantenfilme einer Gruppe unterschiedliche Abmessungen aufweisen.

2. Elektrooptischer Modulator nach Anspruch 1, dadurch gekennzeichnet, daß eine Gruppe symmetrisch zu einer mittleren Schicht aufgebaut ist.

3. Elektrooptischer Modulator nach einem der Ansprüche 1 oder 2, dadurch gekennzeichnet, daß die in einer Gruppe außen angeordneten Quantenfilme breiter und/oder tiefer sind als die inneren Quantenfilme.

4. Elektrooptischer Modulator nach einem der Ansprüche 1 bis 3, dadurch gekennzeichnet, daß die Quantenfilm-Barriere-Struktur einer Gruppe aus extrem dünnen Schichten aufgebaut ist und einen quaternären Quantenfilm annähert.
